# EUROPEAN PATENT APPLICATION

(11) **EP 2 757 298 A1**
(43) Date of publication of application: **23.07.2014**
(21) Application number: 13002775.8
(22) Date of filing: 29.05.2013
(51) Int. Cl.: F16L 27/12, B65G 53/40, B65G 53/52

(54) **Supply pipe with telescoping pipe parts**

(71) Applicant: Tata Steel Nederland Technology B.V., 1970 CA IJmuiden (NL)
(72) Inventor: Schilder, Marcellinus Maria Wilhelmus, 1970 CA IJmuiden (NL)
(74) Representative: Blauw, Frans Gerard

(57) **Abstract**

The invention relates to a supply pipe for granular or powdery material comprising two telescoping pipe parts, a downstream pipe part (11) and an upstream pipe part (10), the downstream pipe part having a larger surface area seen in cross-section than the upstream pipe part, wherein the upstream pipe part (10) is provided with an end outlet opening (14) at the outer end of the upstream pipe part and one or more side outlet openings (15, 16) at the side of the upstream pipe part, the side outet opening allowing the flow of material to form an obtuse angle or to be opposite to the direction of flow of material through the end outlet opening.

## Description

### Field of the invention

The invention relates to a supply pipe for granular or powdery material comprising telescoping pipe parts with means to prevent compression of the material in the supply pipe because of the movement of the telescoping pipe parts with respect to each other.

### Background of the invention

Telescoping supply pipes are used in supply systems to enable movement between for example a storage bin with the granular or powdery material and the delivery end of the supply pipe. Such systems are for instance used to supply material evenly over the length of a container of for instance a lorry or to adapt the length of the supply pipe to the position of the container to be filled with respect to the storage bin. With these systems the telescoping pipe parts of the supply pipe are moved with respect to each other relatively slow and the diameter of the supply pipe is adapted to a high flow rate of the material to be supplied.

With supply systems wherein the supply should be within a certain range and wherein the movement of telescoping pipe parts of the supply pipe could be a sudden movement over a certain distance it is well possible that the material because of the movement is compressed in the supply pipe. Dependent on the fill of the supply pipe compression of the material could already happen with a movement over a relative short distance. Such a compression of material in the supply pipe could result in a complete blockage of the supply which might have serious consequences such as damage to the supply pipe as a result of the forces exerted on the supply pipe.

In continuous casting a casting powder is supplied to a casting mould wherein with a specific supply system the supply side of the supply pipe is fixed to a stationary support near the casting mould while another part of the supply pipe is fixed to the tundish. In such a system the movement of the telescoping pipe parts with respect to each other is due to the up and down movement of the tundish which are sudden movements over a relatively considerable distance. The up and down movement of the tundish is to move the shroud, through which the liquid metal flows from the tundish via a submerged entry nozzle at the end of the shroud into the mould, to spread corrosion of the shroud at the surface level of the mould over part of the length of the shroud. With such a system blockage of material in the telescoping pipe parts can easily occur which if it occurs will have serious consequences for the continuous casting process. This might even result in a breakout wherein solidifying metal sticks to the mould surface, causing a tear in the shell of the strand.

### Objectives of the invention

It is an objective of the present invention to provide a supply pipe with telescoping pipe parts for granular or powdery material designed such that blockage of the material in the supply pipe is prevented.

It is another objective of the present invention to provide a supply pipe with telescoping pipe parts for granular or powdery material wherein the flow rate of the material can be maintained irrespective of the movement of the telescopic parts with respect to each other.

It is another objective of the present invention to provide a supply pipe with telescoping pipe parts for granular or powdery material that can be manufactured easily.

It is still another objective of the present invention to provide a supply pipe with telescoping pipe parts for granular or powdery material which can be made against low costs.

### Description of the invention

According to a first aspect of the invention one or more of the objectives of the invention are realized by providing supply pipe for granular or powdery material comprising two telescoping pipe parts, a downstream pipe part and an upstream pipe part, the downstream pipe part having a larger surface area seen in cross-section than the upstream pipe part, wherein the upstream pipe part is provided with an end outlet opening at the outer end of the upstream pipe part and one or more side outlet openings at the side of the upstream pipe part.

By providing side outlet openings the material in the upstream pipe part can escape sideways when the upstream pipe part slides in the downstream pipe part or the downstream pipe part slides over the upstream pipe part. Without these side outlet openings the material in the supply pipe might get compressed and dependent on the distance over which the pipe parts slide over each other the compression of the material may result in that the compressed material blocks the supply pipe. When that happens the supply pipe in most cases will have to be taken apart to be able to remove the compressed material. In continuous processes as for instance the supply of casting powder in continuous casting such an interruption of the supply of casting powder may result in oxidation of the metal, the forming of surface cracks in the solidifying metal etc. which will lead to rejection of the cast product. In the worst case an interruption of the supply of casting powder may result in a breakout. The prevention of compression of the material in the supply pipe can be improved further by providing that the end outlet opening and the one or more side outlet openings are provided in a nose section with a surface area seen in cross-section which is smaller than that of the upstream pipe part. The nose section may be a section with a constant surface area seen in cross-section over the entire length or a tapered section with surface area seen in cross-section decreasing in downstream direction. If a tapered section is used the angle of the tapered section should be small because otherwise the system with the nose section will work poorly or even not at all. With a nose section with a constant surface area seen in cross-section there is a small transition part from the upstream pipe part to the nose section. By providing such a nose section with a length equal or larger than the telescoping movement that may be expected there is even less risk that the material will get compressed in the supply pipe.

The dimensions of the nose section are taken such that the supply of material in normal operation will be large enough to meet the demand or a predetermined flow rate. This means that the upstream pipe part will be more than large enough to meet the demand, which of course also goes for the downstream pipe part which has an even larger surface area seen in cross-section than the upstream pipe part.

The at least one side outlet opening is designed such that the flow of material is in a direction perpendicular, at an obtuse angle or opposite to the direction of flow of material through the end outlet opening. The direction of flow of material through the end outlet opening is assumed to be parallel to the centre line through the upstream pipe part or the nose section, as the case may be. The larger the angle of the direction of flow through the side outlet opening with respect to the direction of flow of material through the end outlet opening with normal operation the easier the material will flow out of such opening when the pipe parts slide into each other.

To realize such a direction of flow a side opening is formed by a recess in the upstream pipe part or the nose section. In order to force the material in the desired direction the recess is divided in an open part and a closed part, wherein the closed part is positioned upstream of the open part of the recess. If the recess is totally open than in fact the recess would allow a direction of flow that is perpendicular with respect to the direction of flow of material through the end outlet opening with normal operation.

According to a further aspect it is provided that the plane defined by the open part of the recess is at an obtuse or right angle with respect to the upstream part of the centre line of the upstream pipe part or the nose section and the plane defined by the closed part is at a sharp angle with respect to the upstream part of said centre line.

According to a further aspect it is provided that the angle of the open part of the recess is at about a right angle with the plane of the closed part.

In order to prevent that material could flow out of the open part of a recess when the pipe parts are not moving with respect to each other the angle of the open part of the recess with respect to the upstream part of the centre line of the upstream pipe part is chosen such that the angle of inclination of the open recess is less than the minimum angle with respect to the upstream part of the centre line of the upstream pipe part that the flow of the supplied material might take directly downstream of the closed part of the recess. Said minimum angle of the supplied material is dependent on the properties of the material and the load exerted on the material. For different inclinations of the supply pipe the angle of the open part of the recess with respect to the upstream part of the centre line of the upstream pipe part will be taken such that it is smaller than the minimum angle that the flow of the supplied material might take directly downstream of the closed part of the recess.

The recess can of course also have non-flat portions although that will make the manufacturing of the side outlet openings far more difficult. For a curved surface defined by a non-flat portion the angle as defined above is to be taken as the angle between the tangent plane to the normal of the centre point of such curved surface with respect to the upstream part of the centre line of the upstream pipe part. Said normal is parallel or about parallel with the direction of flow of material through the open part of the recess.

A recess with flat portions can easily be made by cutting a part out of the upstream pipe part or the nose section along two planes at an angle to each other. The upstream part of the recess can easily be closed off by means of a flat closing member. In this manner a side outlet opening can be made easily and against low costs.

To further facilitate the movement of the upstream pipe part into the downstream pipe part more in particular into the material in the downstream pipe part the end outlet opening is provided with a bevelled edge.

According to a further aspect of the invention the upstream pipe part is provided with spacers to keep the upstream pipe part at a distance from the inside of the downstream pipe part. The advantage of such spacers is that the end outlet opening of the upstream pipe part is kept along the centre line of the downstream pipe part and the friction between the pipe parts is kept at a minimum.

A telescoping supply pipe will only in a limited number of cases operate in vertical position and in far out most applications the upper and downstream pipe parts of the supply pipe are arranged in a position at an angle with respect to the horizontal. This inclination angle is chosen such that the material is easily transported by means of gravitational forces. With an inclination angle of up to 50° or up to 60° it is preferably provided that the one or more side outlet openings in the upstream pipe part or nose section open in a direction away from the bottom side of the downstream pipe part. With such an inclined supply pipe arrangement it is preferably provided that the one or more side outlet openings are positioned opposite to the inner wall of the upper side of the downstream pipe part. With the side outlet openings in this position and with enough space between the side outlet openings and the inner wall of the downstream pipe part the material can easily flow through the side outlet openings when the upstream pipe part suddenly moves further down into the downstream pipe part.

With an inclination angle of the supply pipe larger than the aforementioned angles the side outlet openings could also be provided at other positions than only the upwards directed part of the at the sides of the upstream pipe part or nose section. With an inclination angle of the supply pipe of above 60° or above 70° the side outlet openings could well be positioned around the circumference of the upstream pipe part or nose section.

In a number of test good results have been achieved with a supply pipe wherein the inner surface area of the upstream pipe part or the nose section in cross-section at the end outlet is between 30-70 % of the inner surface area of the downstream pipe part in cross-section. Also good results were achieved wherein the inner surface area of the upstream pipe part or the nose section in cross-section at the smallest passage of the closed part of the recess is 40-60% of the inner surface area of the upstream pipe part or the nose section in cross-section at the end outlet.

### Brief description of the drawings

The invention will be further explained on hand of the example shown in the drawing, in which:
- fig. 1: shows schematically a telescoping supply pipe for the supply of casting powder to a casting mould;
- fig. 2: shows the telescoping supply pipe in more detail;
- fig. 3: shows a longitudinal section of the telescoping supply pipe during normal operation;
- fig. 4: shows a cross-section along the line A-A in fig. 3;
- fig. 5: shows a longitudinal section of the telescoping supply pipe after the upstream pipe part has been moved further into the downstream pipe part, and
- fig. 6: shows a cross-section along the line A-A in fig. 5.

### Detailed description of the drawings

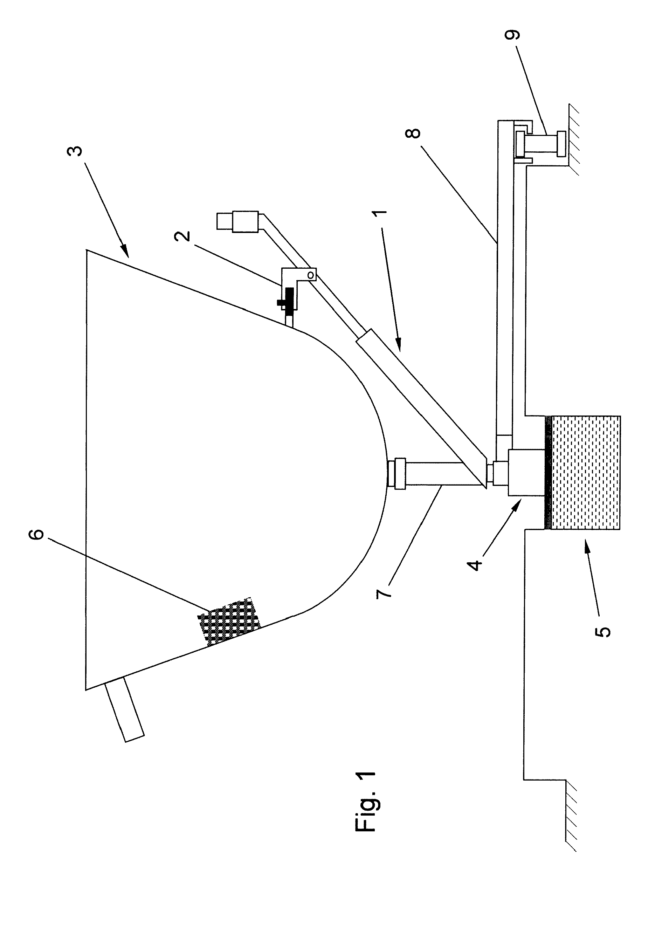

In fig. 1 a telescoping supply pipe 1 is shown which is connected by connecting means 2 to a tundish 3 and at the outer end to a supply device 4 with which the material, in this example casting powder, is supplied dependent on demand to liquid metal in casting mould 5. Tundish 3 is provided with a lining of refractory material 6, of which for the sake of clarity only a small portion is shown in the drawing, to withstand the temperature of the liquid metal contained in the tundish. Liquid metal is fed from the tundish 3 by means of a shroud 7 to the casting mould 5. Tundish 3 is periodically moved in vertical direction to spread the corroding effect of the liquid metal and casting powder on the shroud evenly over a part of the shroud to extend the stand time of the shroud.

The supply device 4 has a fixed position relative to the casting mould 5 to which end the supply device is fixedly connected through connecting arm 8 to a stationary support 9. The supply device 4 is not directly connected to the casting mould 5 because the casting mould is subjected to an oscillating movement. The oscillating movement of the casting mould is necessary to prevent that the solidifying metal sticks to the walls of the mould.

At the other end of the telescoping supply pipe 1, that is above connecting means 2, the supply pipe is connected to a storage bin for casting powder not shown in the drawing. The storage bin in this example is connected to the tundish 3 and therefore moves simultaneously with tundish 3 up and down. If the storage bin has a stationary support independent from the tundish 3 another telescoping supply pipe would be needed to connect supply pipe 1 to the storage bin.

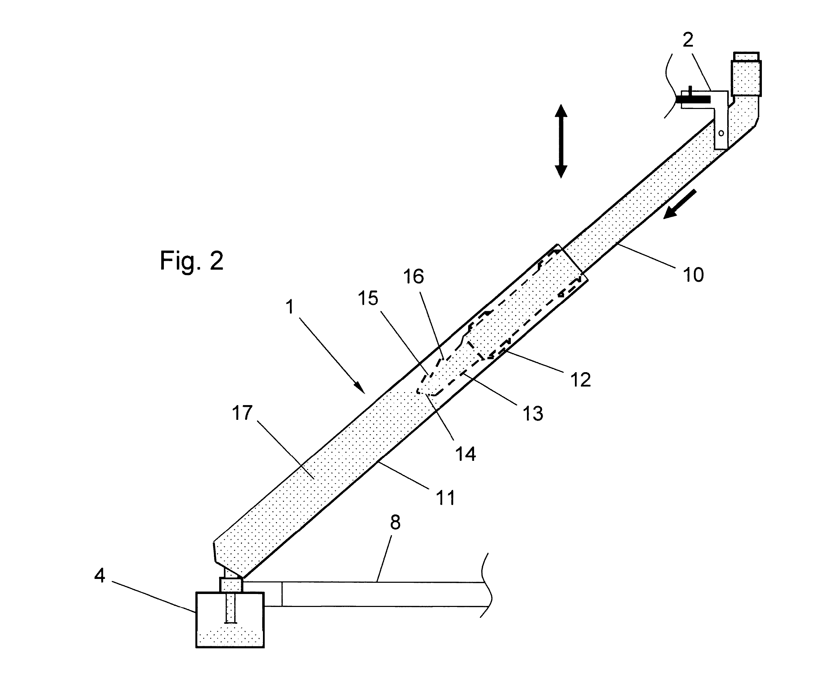

In fig. 2 telescoping supply pipe 1 is shown in more detail with an upstream pipe part 10 and a downstream pipe part 11, wherein the upstream pipe part 10 is connected to tundish 3 through connecting means 2 and the downstream pipe part 11 is connected to supply device 4. The up and down movement of tundish 3 will not only result in a movement of the upstream pipe part 10 and the downstream pipe part 11 with respect to each other but also in a change of the angle between the downstream pipe part 11 and supply device 4. For that reason the connection between downstream pipe part 11 and supply device is designed to allow some angular movement between these parts.

The upstream pipe part 10 fits into the downstream pipe part 11 and the outer dimensions of the upstream pipe part 10 are sufficiently smaller than the inner dimensions of the downstream pipe part 11 to leave a certain space between these pipe parts. In order to centre the upstream pipe part 10 in the downstream pipe part 11, the upstream pipe part 10 is provided with spacers 12.

At the outer end of the upstream pipe part 10 a nose section 13 is provided with smaller outer and inner dimensions than those of upstream pipe part 10. The nose section has an end outlet opening 14 and side outlet openings 15, 16.

The surface area seen in cross-section of the nose section 13 at the narrowest point is large enough to meet the demand of casting powder. In this example the supply is regulated by means of the chicken-feed principle, wherein the upstream pipe part 10 and nose section 13 are filled with casting powder 17 and wherein the supply of casting powder stops when the end outlet opening 14 and the level of casting powder 17 in the downstream pipe part 11 at the position of the outlet opening 14 are at the same height. The same principle applies in the supply device 4, the supply of casting powder will stop when the supply device 4 is filled to a certain level.

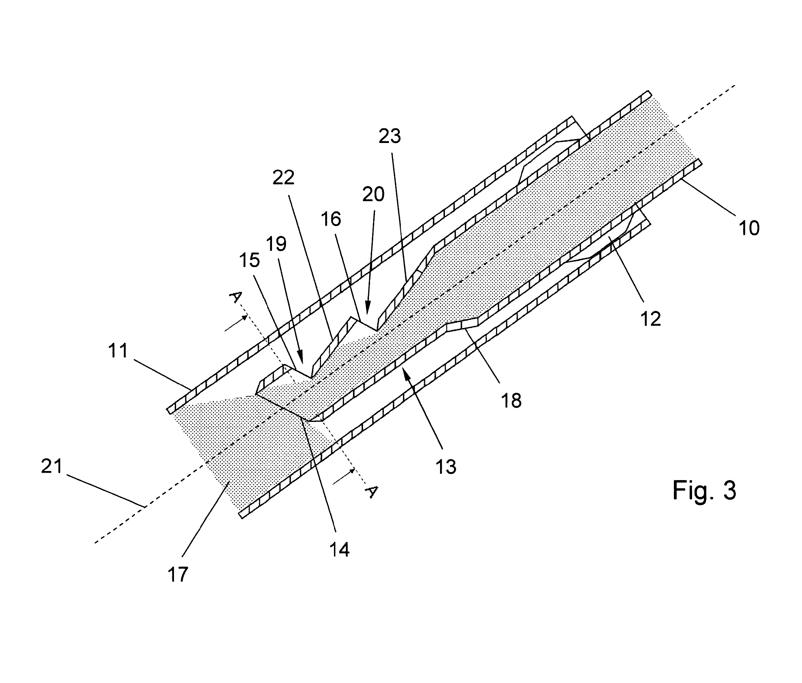

In fig. 3 the nose section 13 is shown in more detail. The nose section 13 is made from a square section which is connected with the upstream pipe part 10 through a tapered section 18. In the nose section 13 two recesses 19, 20 have been made. Such a recess can easily be made by making two cuts at different angles, in this case a first cut at an obtuse angle with respect to the upstream part of centre line 21 and a second cut at an sharp angle with respect to the upstream part of centre line 21. After making the recess, part of the recess is closed off by means of a cover plate 22, 23, after which the side outlet openings 15, 16 remain.

The angle of the open recesses 19, 20 with respect to the angle of inclination of the material at positions 24, 25 is such that in normal operation, that is without any movement or any significant movement of pipe parts 10, 11 with respect to each other, the material will not flow out the open recesses 19, 20.

Further, the angle of the side outlet openings 15, 16 is such that when casting powder leaves the nose section through the side outlet openings 15, 16 it will be in a direction opposite or about opposite to the normal direction through the end outlet opening 14. Moreover by positioning the side outlet openings 15, 16 at the upper side of the nose section has the advantage that use is made of the larger free space at that side because of the inclination of the supply pipe 1.

The edge of the end outlet opening 14 is bevelled such that it will easier enter the casting powder if the upstream pipe part 10 is moved downward into the downstream pipe part 11. The free ends of cover plates 22, 23 are also bevelled for the same reason. The end outlet opening 14 is at angle with respect to the centre line 21 such that it is about horizontal within the inclined supply pipe 1 in order to have the chicken-feed principle take effect properly. In this example the planes of the side outlet openings 15, 16 are parallel to the plane defined by the end outlet opening 14 but that is not a necessity.

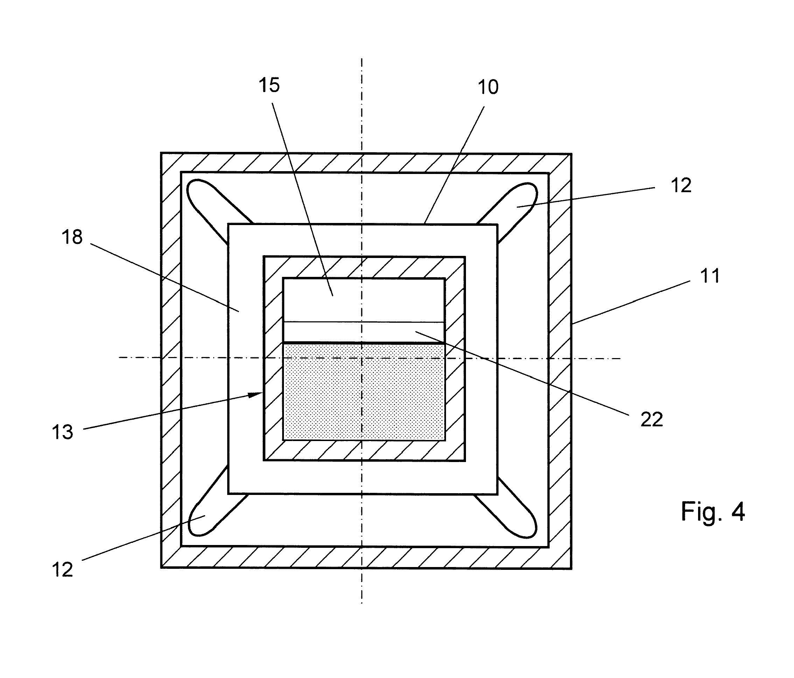

Fig. 4 shows a cross-section along line A-A in fig. 3 with the downstream pipe part 11, the upstream pipe part 10, the nose section 13 and side outlet opening 15. The lowest edge of cover plate 22 next to the side outlet openings 15 determines with the part of the square tube of nose section 13 below that lowest edge of cover plate 22 the smallest passage in the nose section. With normal operation the side outlet openings 15, 16 will be free from casting powder 17.

The number of side outlet openings is dependent on the length over which the nose section could be pushed into the downstream pipe part, wherein the number of side outlet openings will be larger with a greater length over which the nose section could be pushed into the downstream pipe part.

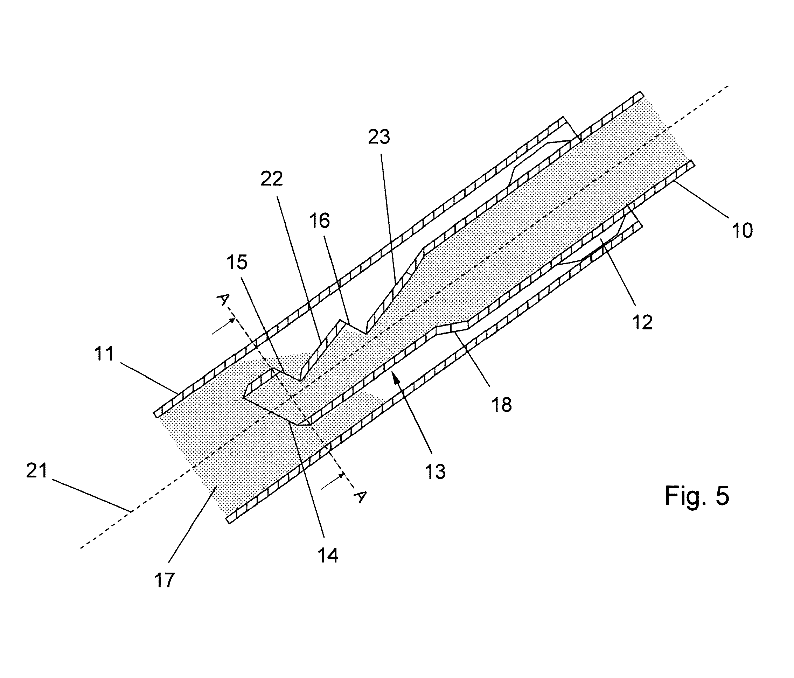

In fig. 5 the supply pipe is shown in the situation that the upstream pipe part 10 has been forced downward with respect of the downstream pipe part 11 into the casting powder supply built up in the downstream pipe part 11. By the downward movement of the upstream pipe part 10 part of the casting powder in the nose section 13 has been pushed through side outlet opening 15 into the free space between the nose section and the inner wall of downstream pipe part 11. At the side outlet openings 16 upstream from the side outlet opening 15 the casting powder has already been pushed in the direction of the side outlet opening 16 but has not yet been pushed through the side outlet opening.

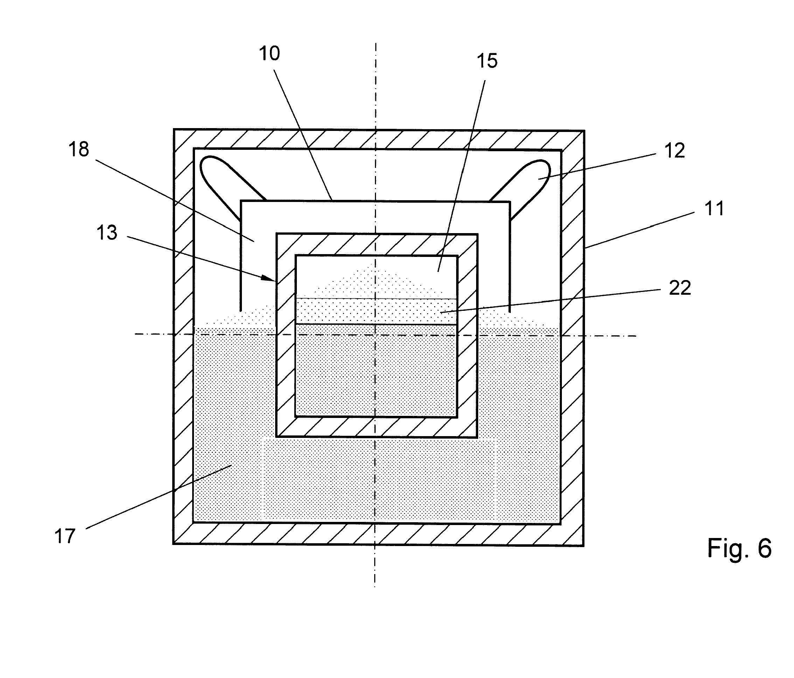

In fig. 6 the situation of fig. 5 is shown in cross-section along line A-A. In comparison with fig. 4 it is clear that a large part of the nose section 13 at that position is enclosed by the casting powder 17 and that part of the casting powder has been pushed through side outlet opening 15.

## Claims

1. Supply pipe for granular or powdery material comprising two telescoping pipe parts, a downstream pipe part and an upstream pipe part, the downstream pipe part having a larger surface area seen in cross-section than the upstream pipe part, wherein the upstream pipe part is provided with an end outlet opening at the outer end of the upstream pipe part and one or more side outlet openings at the side of the upstream pipe part.

2. Supply pipe according to claim 1, wherein the end outlet opening and the one or more side outlet openings are provided in a nose section with a surface area seen in cross-section which is smaller than that of the upstream pipe part.

3. Supply pipe according to claim 1 or 2, wherein at least one side outlet opening is designed such that the flow of material is in a direction at an obtuse angle or opposite to the direction of flow of material through the end outlet opening.

4. Supply pipe according to one or more of claim 1-3, wherein a side opening is formed by a recess in the upstream pipe part or the nose section.

5. Supply pipe according to claim 4, wherein the recess has an open part and a closed part, wherein the closed part is positioned upstream of the open part of the recess.

6. Supply pipe according to claim 5, wherein the plane defined by the open part of the recess is at an obtuse angle with respect to the upstream part of the centre line of the upstream pipe part or the nose section and the plane defined by the closed part is at a sharp angle with respect to the upstream part of said centre line.

7. Supply pipe according to claim 5 or 6, wherein the closed part of the recess is closed off by means of a flat closing member.

8. Supply pipe according to one or more of claims 2-7, wherein the surface area of the nose section as seen in cross-section decreases from the connection with the upstream pipe part to the end outlet opening.

9. Supply pipe according to one or more of claims 1-8, wherein the end outlet opening is provided with a bevelled edge.

10. Supply pipe according to one or more of claims 1-9, wherein the upstream pipe part is provided with spacers to keep the upstream pipe part at a distance from the inside of the downstream pipe part.

11. Supply pipe according to one or more of claims 1-10, wherein the upper and downstream pipe parts of the supply pipe are arranged in a position at an angle with respect to the horizontal and wherein the one or more side outlet openings in the upstream pipe part or nose section open in a direction away from the bottom side of the downstream pipe part.

12. Supply pipe according to claim 11, wherein the one or more side outlet openings are positioned opposite to the inner wall of the upper side of the downstream pipe part.

13. Supply pipe according claim 12, wherein the plane defined by the end outlet opening of the nose section is parallel to the planes defined by the side outlet openings.

14. Supply pipe according to one or more of claims 2-13, wherein the inner surface area of the nose section in cross-section at the end outlet is between 30-70 % of the inner surface area of the downstream pipe part in cross-section.

15. Supply pipe according to one or more of claims 5-14, wherein the inner surface area of the nose section in cross-section at the smallest passage of the closed part of the recess is 40-60% of the inner surface area of the upstream pipe part or the nose section in cross-section at the end outlet.
